(19) Europäisches Patentamt
European Patent Office
Office européen des brevets

(11) EP 2 414 460 B1

(12) # FASCICULE DE BREVET EUROPEEN

(45) Date de publication et mention de la délivrance du brevet:
**09.01.2013 Bulletin 2013/02**

(21) Numéro de dépôt: **10723186.2**

(22) Date de dépôt: **01.04.2010**

(51) Int Cl.:
***C08L 95/00*** *(2006.01)* ***C04B 20/10*** *(2006.01)*
***C04B 26/26*** *(2006.01)*

(86) Numéro de dépôt international:
**PCT/FR2010/050630**

(87) Numéro de publication internationale:
**WO 2010/112784 (07.10.2010 Gazette 2010/40)**

(54) **PROCEDE DE FABRICATION D'UNE COMPOSITION HYDROCARBONEE**

VERFAHREN ZUR HERSTELLUNG EINER KOHLENWASSERSTOFFZUSAMMENSETZUNG

METHOD FOR PREPARING A HYDROCARBON COMPOSITION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **03.04.2009 FR 0901625**

(43) Date de publication de la demande:
**08.02.2012 Bulletin 2012/06**

(73) Titulaire: **Lafarge**
**75116 Paris (FR)**

(72) Inventeurs:
- **BROCAS, Stéphane**
  **F-34000 Montpellier (FR)**
- **ECH, Mohsen**
  **F-69008 Lyon (FR)**
- **RICHARD, Nicolas**
  **F-38460 Crémieu (FR)**
- **VILLARD, Emmanuel**
  **F-42320 Saint-Christo-en-Jarez (FR)**
- **BAAJ, Hassan**
  **F-69003 Lyon (FR)**
- **TOUBEAU, Philippe**
  **F-38300 Ruy (FR)**

(74) Mandataire: **Berruet, Laure**
**LAFARGE**
**Département Propriété Intellectuelle (DPI)**
**95, Rue du Montmurier - BP9**
**38291 Saint Quentin Fallavier Cedex (FR)**

(56) Documents cités:
**EP-A- 1 111 010 GB-A- 1 386 855**
**US-A- 5 160 453**

- **NORTHSTONE(NI) LTD QUARRY & ASPHALT DIVISION: "European Aggregate Sizes (BS EN 13043)" INTERNET CITATION pages 1-5, XP002593598 Extrait de l'Internet: URL:http: //www.northstonematerials.com/fil estore/ documents/euro-aggregates.p [extrait le 2010-07-26]**
- **ANONYMOUS: 'NF EN 12591, Bitumes et liants bitumineux, Spécifications des bitumes routiers' 01 Décembre 2009, pages 1 - 28, XP055032514**
- **ANONYMOUS: 'NF P 98-251-1, Essai DURIEZ sur mélanges hydrocarbonés à chaud' 01 Septembre 2002, pages 1 - 13, XP055032516**
- **ANONYMOUS: 'XP P 18-545, Granulats, Éléments de définition, conformité et codification' 01 Février 2004, pages 1 - 59, XP055032506**
- **ANONYMOUS: 'NF EN 13043, Granulats pour mélanges hydrocarbonés et pour enduits superficiels utilisés dans la construction des chaussées, aérodromes et d'autres zones de circulation' 01 Août 2003, pages 1 - 53, XP055032509**
- **ANONYMOUS: 'NF EN 13924, Bitumes et liants bitumineux, Spécifications des bitumes routiers de grade dur' 01 Décembre 2006, pages 1 - 24, XP055032512**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a pour objet un procédé de fabrication d'une composition hydrocarbonée comprenant une étape de mélange de granulats et d'au moins un polymère cationique spécifique, puis une étape de mise en contact du mélange avec au moins un liant hydrocarboné. Une composition hydrocarbonée comprenant au moins un polymère cationique spécifique et l'utilisation d'au moins un polymère cationique spécifique pour le traitement de surface de granulats destinés à la préparation d'une composition hydrocarbonée sont les deux autres objets de la présente invention.

Les compositions hydrocarbonées sont largement utilisées, notamment pour la réalisation ou la réparation des chaussées. La fabrication des compositions hydrocarbonées peut être réalisée selon plusieurs méthodes : l'enrobage avec une émulsion de liant hydrocarboné, l'enrobage avec un liant hydrocarboné chauffé ou le gravillonnage.

L'enrobage avec une émulsion de liant hydrocarboné consiste en un mélange entre des granulats humides, et une émulsion de liant hydrocarboné. Le problème majeur de cette technique est la difficulté à maîtriser la formation d'un film de liant hydrocarboné à partir d'une émulsion en présence de tout type de granulats. Une bonne adhésion entre les granulats et le liant hydrocarboné n'est pas toujours assurée. Par exemple il est connu de part le document EP 1 111 010, de faire des émulsions de liant hydrocarboné en utilisant des amidoamines d'acides gras en mélange avec des polymères cationiques. Il est également connu de part les documents GB1 386 855 et US 5,160,453 d'incorporer des polymères cationiques dans des émulsions de liant hydrocarboné.

L'enrobage avec un liant hydrocarboné chauffé consiste en un mélange de granulats séchés et éventuellement chauffés avec un liant hydrocarboné chauffé. Le problème majeur de cette technique est lié à l'émission de fumées à cause des températures élevées (généralement entre 90°C et 200°C) et au coût énergétique important dû à l'étape de séchage des granulats.

Le gravillonnage consiste en l'application d'une émulsion de bitume, sur une route à réparer par exemple, ensuite en l'application de granulats non chauffés et enfin en un passage d'un rouleau compresseur. L'inconvénient majeur de cette technique est la surface de contact réduite entre les granulats et le liant hydrocarboné. Une bonne adhésion entre les granulats et le liant hydrocarboné est alors indispensable afin d'assurer une durée de vie satisfaisante à la composition hydrocarbonée.

Quelle que soit la méthode de préparation de la composition hydrocarbonée, la nature et la propreté des granulats utilisés peuvent être des critères majeurs pour la qualité des

compositions hydrocarbonées, en particulier lorsque ces dernières sont exposées à l'eau ou à l'humidité. A titre d'exemple, des phénomènes de désenrobage peuvent être observés, c'est-à-dire que l'adhésion liant hydrocarboné/ granulats n'est plus assurée, ou alors seulement partiellement. D'autre part, la tenue à l'eau des compositions hydrocarbonées peut être diminuée, c'est-à-dire que les résistances mécaniques des compositions hydrocarbonées peuvent diminuer fortement après un contact prolongé avec de l'eau.

Il existe des normes pour déterminer les critères que les granulats doivent respecter pour pouvoir être utilisés dans une composition hydrocarbonée (voir notamment la norme NF EN 13043). Or, les critères déterminés par les normes sont tels qu'une partie significative des granulats extraits en carrière peut être mise de côté et ainsi ne pas être utilisée pour la fabrication de compositions hydrocarbonées. Il existe donc un besoin de valorisation de ces granulats non utilisables actuellement pour la fabrication de compositions hydrocarbonées.

Pour résoudre le problème de propreté des granulats, il est connu de réaliser une ou plusieurs opérations de lavage des granulats au cours de la fabrication des compositions hydrocarbonées afin de réduire la teneur en impuretés nocives et ainsi augmenter la propreté des granulats utilisés. Il est parfois nécessaire de réaliser plusieurs opérations de nettoyage des granulats pour obtenir la qualité souhaitée. Néanmoins, ces opérations de lavage nécessitent de lourds investissements et un apport d'eau à proximité du lieu de production. D'autre part, la présence d'eau suite au lavage peut poser des problèmes au niveau de l'adhésion entre le liant hydrocarboné et les granulats.

Il existe en outre des normes pour évaluer la compatibilité entre les granulats et les liants hydrocarbonés et juger de la qualité de l'adhésion (par exemple l'essai Duriez selon la norme NF P98-251-1). En effet, la qualité des granulats en eux-mêmes et la compatibilité entre les granulats et les liants hydrocarbonés sont régies par des critères différents. Des granulats qui respectent les critères déterminés par les normes pour pouvoir être utilisés dans une composition hydrocarbonée, peuvent ne pas être compatibles avec le liant hydrocarboné avec lequel ils devraient être utilisés. La non-compatibilité entre les granulats et les liants hydrocarbonés peut se traduire par des problèmes d'adhésion.

Pour résoudre le problème d'adhésion, il existe des agents chimiques, appelés « dopes d'adhésivité », qui sont ajoutés directement dans le liant hydrocarboné.

Cependant, il existe un problème de gaspillage de ces agents chimiques, car on suppose qu'une partie seulement des produits se retrouve effectivement à l'interface entre le liant hydrocarboné et les granulats par rapport à la quantité totale ajoutée au liant hydrocarboné. Aussi, il existe un besoin d'une solution permettant d'améliorer le rapport entre la quantité ajoutée et l'efficacité des agents chimiques utilisés et de réduire ainsi le gaspillage de tels agents.

Afin de répondre aux exigences des industriels il est devenu nécessaire de développer un traitement des

granulats alternatif au lavage et permettant d'améliorer l'adhésion liant hydrocarboné/granulats dans les compositions hydrocarbonées.

Aussi le problème que se propose de résoudre l'invention est de fournir un nouveau moyen adapté pour améliorer l'adhésion du liant hydrocarboné avec les granulats dans les compositions hydrocarbonées.

De manière inattendue, les inventeurs ont mis en évidence qu'il est possible d'utiliser un polymère cationique particulier pour traiter les granulats destinés à la fabrication de compositions hydrocarbonées et ainsi améliorer l'adhésion du liant hydrocarboné avec les granulats.

Dans ce but, la présente invention propose un procédé de fabrication d'une composition hydrocarbonée, comprenant les étapes suivantes :

(i) réaliser un mélange de granulats de diamètre maximal non nul et inférieur ou égal à 30 mm et d'une quantité inférieure ou égale à 0,8 g par mètre carré de surface spécifique développée par les granulats d'au moins un polymère cationique sous forme liquide ayant une densité de charges cationiques supérieure ou égale à 0,5 meq/g et une viscosité intrinsèque comprise de 0,01 à 0,8 dl/g, la viscosité intrinsèque étant mesurée à 25°C dans une solution NaCl 3M, avec un viscosimètre capillaire de type Ubbelhode, la surface spécifique ($\Sigma_{sp}$) développée par les granulats étant déterminée selon la formule (I) suivante :

$$\Sigma_{sp} = (0{,}0025 \times G) + (0{,}023 \times S) + (0{,}12 \times s) + (1{,}35 \times f) \qquad \text{Formule (I)}$$

dans laquelle :

*G* est le pourcentage massique des granulats dont le diamètre est compris de 6,3 à 30 mm ;
*S* est le pourcentage massique des granulats dont le diamètre est compris de 0,315 à moins de 6,3 mm ;
*s* est le pourcentage massique des granulats dont le diamètre est compris de 0,08 à moins de 0,315 mm ;
*f* est le pourcentage massique des granulats dont le diamètre est strictement inférieur à 0,08 mm ; et

(ii) mettre en contact le mélange obtenu à l'étape (i) avec au moins un liant hydrocarboné.

L'invention offre des avantages déterminants, en particulier le procédé selon l'invention permet d'obtenir des compositions hydrocarbonées ayant une tenue à l'eau améliorée, c'est-à-dire que l'adhésion liant hydrocarboné/granulats des compositions hydrocarbonées selon l'invention après immersion dans l'eau ou exposition à l'humidité est meilleure que celle des autres compositions hydrocarbonées.

Avantageusement, la présente invention permet de valoriser des granulats qui sont non-conformes par rapport aux normes concernant les granulats pour compositions hydrocarbonées (voir notamment les normes XP P 18545 chapitres 7 et 8, et NF EN 13043) et qu'il n'est par conséquent pas possible d'utiliser. Le procédé selon l'invention permet par exemple d'utiliser des granulats ayant une valeur au bleu de méthylène élevée, c'est-à-dire supérieure à 2 g, 2,5 g ou 3 g de bleu de méthylène par kilogramme de granulats en fonction de l'application visée.

Un autre avantage du procédé selon l'invention est qu'il n'a pas d'influence négative sur les propriétés d'usage des compositions hydrocarbonées.

Le procédé selon l'invention présente par ailleurs l'avantage d'éviter une surconsommation d'eau par rapport au lavage des granulats classiquement utilisé.

L'invention offre comme autre avantage que les polymères cationiques selon l'invention permettent de diminuer significativement la nocivité des argiles naturellement présentes dans les granulats.

Un autre avantage de la présente invention est que le procédé selon l'invention permet une optimisation de la quantité de polymère cationique par rapport à un ajout direct dans le liant hydrocarboné avant son mélange avec les granulats.

Enfin l'invention a pour avantage de pouvoir être mise en oeuvre dans toutes industries, notamment l'industrie du bâtiment, l'industrie chimique (adjuvantiers) et l'ensemble des marchés de la construction et de l'étanchéité (bâtiment ou génie civil), de la route ou des bardeaux de toiture.

D'autres avantages et caractéristiques de l'invention apparaîtront clairement à la lecture de la description et des exemples donnés à titre purement illustratif et non limitatif qui vont suivre.

Par l'expression « composition hydrocarbonée » on entend selon la présente invention une composition comprenant au moins un liant hydrocarboné et des granulats, comme par exemple du béton bitumineux, des graves-bitumes, de l'asphalte, ou des enduits superficiels à base d'émulsion de bitume. Une composition hydrocarbonée selon l'invention peut en outre comprendre des additifs usuels, comme par exemple des dopes d'adhésivité ou des fibres (en verre, en cellulose ou en amiante, par exemple). Une composition hydrocarbonée selon l'invention peut en outre comprendre des

matériaux recyclés, comme par exemple des bardeaux de toiture, du verre ou du béton.

Par l'expression « liant hydrocarboné » on entend selon la présente invention une substance composée d'un mélange d'hydrocarbures, très visqueuse voire solide à la température ambiante. Un liant hydrocarboné selon l'invention peut par exemple être du bitume naturel ou du bitume brut dérivé du pétrole (bitumes purs NF EN 12591, bitumes spéciaux de grade « dur » NF EN 13924, etc.). Les liants hydrocarbonés selon l'invention comprennent également les liants dits « verts » car issus de matières végétales, comme par exemple l'huile de colza.

Par l'expression « granulats » on entend selon la présente invention des sables et/ou des gravillons et/ou des graves et/ou des fines (voir les normes XP P 18545 et NF EN 13043). Les granulats selon l'invention peuvent être issus de carrières ou de matériaux recyclés (des fraisats par exemple).

Par l'expression « polymère » on entend selon la présente invention un composé comportant plus de deux unités monomériques, identiques ou différentes, présentant un ordre particulier ou non.

Par l'expression « polymère cationique » on entend selon la présente invention un polymère dont la somme des charges est positive. De préférence, les charges positives du polymère cationique selon l'invention sont apportées par des groupes amine quaternaire et/ou des groupes amine protonée.

Par le terme « matière active » on entend selon la présente invention un composé qui a un effet sur les granulats et le liant hydrocarboné dans le cadre de leur utilisation pour la fabrication d'une composition hydrocarbonée. En particulier, la matière active n'est pas un solvant.

L'invention concerne un procédé de fabrication d'une composition hydrocarbonée, comprenant les étapes suivantes :

(i) réaliser un mélange de granulats de diamètre maximal inférieur ou égal à 30 mm et d'une quantité inférieure ou égale à 0,8 g par mètre carré de surface spécifique développée par les granulats d'au moins un polymère cationique sous forme liquide ayant une densité de charges cationiques supérieure ou égale à 0,5 meq/g et une viscosité intrinsèque comprise de 0,01 à 0,8 dl/g ; et

(ii) mettre en contact le mélange obtenu à l'étape (i) avec au moins un liant hydrocarboné.

De préférence, le polymère cationique du procédé selon l'invention présente les caractéristiques décrites ci-après.

Un autre objet selon l'invention est une composition hydrocarbonée comprenant au moins un liant hydrocarboné, des granulats de diamètre maximal inférieur ou égal à 30 mm et une quantité inférieure ou égale à 0,8 g par mètre carré de surface spécifique développée par les granulats d'au moins un polymère cationique ayant une densité de charges cationiques supérieure ou égale à 0,5 meq/g et une viscosité intrinsèque comprise de 0,01 à 0,8 dl/g.

Avantageusement, le polymère cationique de la composition selon l'invention présente les caractéristiques décrites ci-après.

Un autre objet selon l'invention est l'utilisation d'au moins un polymère cationique sous forme liquide pour le traitement de surface de granulats de diamètre maximal inférieur ou égal à 30 mm destinés à la préparation d'une composition hydrocarbonée, ledit polymère cationique ayant une densité de charges cationiques supérieure ou égale à 0,5 meq/g et une viscosité intrinsèque comprise de 0,01 à 0,8 dl/g, et étant utilisé en une quantité inférieure ou égale à 0,8 g de polymère par mètre carré de surface spécifique développée par les granulats.

Avantageusement, le polymère cationique de l'utilisation selon l'invention présente les caractéristiques décrites ci-après.

Les caractéristiques décrites ci-après s'appliquent aux différents objets et variantes selon l'invention.

La surface spécifique développée par les granulats peut être obtenue selon différentes méthodes qui sont bien connues de l'homme du métier, comme par exemple la méthode BET. De préférence, la surface spécifique ($\Sigma_{sp}$) développée par les granulats (exprimée en $m^2/kg$) est déterminée selon la formule (I) suivante :

$$\Sigma_{sp} = (0{,}0025 \times G) + (0{,}023 \times S) + (0{,}12 \times s) + (1{,}35 \times f)$$

Formule (I)

dans laquelle :

*G* est le pourcentage massique des granulats à traiter dont le diamètre est compris de 6,3 à 30 mm ;
*S* est le pourcentage massique des granulats à traiter dont le diamètre est compris de 0,315 à moins de 6,3 mm ;
*s* est le pourcentage massique des granulats à traiter dont le diamètre est compris de 0,08 à moins de 0,315 mm ;
*f* est le pourcentage massique des granulats à traiter dont le diamètre est strictement inférieur à 0,08 mm.

Il suffit ensuite de multiplier la surface spécifique obtenue par la formule (I) par la masse totale de granulats à traiter en kg pour obtenir la surface totale à traiter, et de multiplier cette surface par 0,8 (gramme par mètre carré de surface spécifique développée par les granulats) pour obtenir la quantité totale maximale de polymère cationique selon l'invention à utiliser pour traiter les granulats souhaités.

Les pourcentages massiques des différentes fractions de granulats à traiter (*G*, *S*, *s* et *f*) de la formule (I) ci-dessus peuvent par exemple être obtenus par simple tamisage avec les tamis appropriés afin de séparer les fractions, puis par pesage des fractions obtenues. Le rapport entre la masse de chaque fraction de granulats à traiter et la masse totale de granulats à traiter permet d'obtenir le pourcentage massique de chaque fraction de granulats à traiter.

Avantageusement, les granulats selon l'invention sont de nature siliceuse et/ou silico-calcaire, de préférence siliceuse.

Selon l'invention, une limite du diamètre maximal des granulats est prévue dans la mesure où la plupart des normes concernant les enrobés bitumeux prévoient une limitation du diamètre maximal des granulats. A titre d'exemple, la norme EN 13108-1, prévoit que pour certains enrobés bitumineux le diamètre maximal des granulats est inférieur à 20 mm, la norme EN 13043 précisant que moins de 2 % des granulats peuvent avoir un diamètre de 1,4 fois le diamètre maximal, c'est-à-dire 28 mm.

De préférence, les granulats selon l'invention ont un diamètre maximal inférieur ou égal à 20 mm, avantageusement inférieur ou égal à 15 mm.

Polymère cationique

De préférence, le polymère cationique selon l'invention est présent en une quantité inférieure ou égale à 0,6 g par mètre carré de surface spécifique développée par les granulats, avantageusement inférieure ou égale à 0,4 g par mètre carré de surface spécifique développée par les granulats.

Avantageusement, le polymère cationique selon l'invention est présent en une quantité supérieure ou égale à 0,0001 g par mètre carré de surface spécifique développée par les granulats, de préférence supérieure ou égale à 0,0005 g par mètre carré de surface spécifique développée par les granulats, avantageusement supérieure ou égale à 0,0008 g par mètre carré de surface spécifique développée par les granulats, et préférentiellement supérieure ou égale à 0,001 g par mètre carré de surface spécifique développée par les granulats.

De préférence, le polymère cationique selon l'invention a une densité de charges cationiques supérieure ou égale à 1 meq/g, et avantageusement supérieure ou égale à 2 meq/g.

Selon l'invention, le polymère cationique a de préférence un poids moléculaire exprimé par une viscosité intrinsèque comprise de 0,02 à 0,8 dl/g, avantageusement comprise de 0,03 à 0,8 dl/g, et préférentiellement comprise de 0,04 à 0,8 dl/g.

Le polymère cationique selon l'invention peut présenter une structure linéaire, peigne ou ramifiée. De préférence, le polymère cationique selon l'invention est linéaire.

Les groupes cationiques peuvent être notamment des groupes phosphonium, pyridinium, sulfonium, amine quaternaire et/ou amine protonée. De préférence, les groupes cationiques des polymères cationiques selon l'invention sont des groupes amine quaternaire et/ou amine protonée.

Ces groupes cationiques peuvent être situés dans la chaîne du polymère ou comme groupe pendant.

Un grand nombre de polymères cationiques sont connus en tant que tels. De tels polymères peuvent être obtenus directement par un des procédés de polymérisation connus, tels que la polymérisation radicalaire, la polycondensation ou la polyaddition.

Ils peuvent également être préparés par modification post-synthétique d'un polymère, par exemple par greffage de groupements portant une ou plusieurs fonctions cationiques sur une chaîne polymérique portant des groupes réactifs appropriés. De préférence, le polymère est d'origine naturelle.

La polymérisation est réalisée à partir d'au moins un monomère portant un groupe cationique ou un précurseur adapté.

Les polymères obtenus à partir de monomères portant des groupes amine et imine sont particulièrement utiles. L'azote peut être quaternisé après polymérisation de manière connue, par exemple par alkylation à l'aide d'un composé alkylant, par exemple par du chlorure de méthyle, ou en milieu acide, par protonation.

De préférence, le polymère cationique selon l'invention comprend des groupes amine quaternaire et/ou des groupes amine protonée.

Parmi les monomères portant déjà une fonction amine quaternaire cationique, on peut citer notamment les sels de diallyldialkyl ammonium, les (méth)acrylates de dialkylaminoalkyl quaternisés, et les (méth)acrylamides N-substitués par un dialkylaminoalkyl quaternisé.

La polymérisation peut être réalisée avec des monomères non ioniques, de préférence à chaîne courte, comportant 2 à 6 atomes de carbone. Des monomères anioniques peuvent également être présents dans la mesure où ils n'affectent pas les groupements cationiques.

Dans le cadre de la modification de polymères par greffage, on peut citer les polymères naturels greffés, tels que les amidons cationiques ou le chitosan.

A titre d'exemple, on peut citer des polymères cationiques de la famille des polyvinylamines, lesquels peuvent être obtenus par polymérisation de N-vinylformamide, suivie d'une hydrolyse. Les polyvinylamines quaternisés peuvent être préparés comme décrit dans le brevet US 5,292,441. Sont également appropriés les polymères de type polyéthylène imine. Ces derniers sont quaternisés par protonation.

Particulièrement préférés sont les polymères cationiques obtenus par polycondensation d'épichlorhydrine avec une mono- ou une dialkylamine, notamment la méthylamine ou diméthylamine. Leur préparation a été décrite par exemple dans les brevets US 3,738,945 et US 3,725,312.

De préférence, le polymère cationique selon l'invention est susceptible d'être obtenu par :

- condensation d'épichlorhydrine avec une dialkylamine ; ou
- condensation d'épichlorhydrine avec une monoalkylamine, suivie d'une protonation.

La dialkylamine est de préférence la diméthylamine. La monoalkylamine est de préférence la méthylamine.

Le motif du polymère cationique obtenu par polycondensation de diméthylamine et d'épichlorhydrine peut être représenté comme suit :

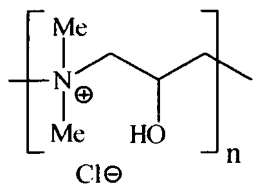

Egalement appropriés sont les polymères de type polyacrylamide modifiés par réaction de Mannich tel que le polyacrylamide N-substitué par un groupe diméthylaminométhyle.

Egalement appropriés sont les polymères cationiques obtenus par polycondensation de dicyandiamide et de formaldéhyde. Ces polymères et leur procédé d'obtention sont décrits dans le brevet FR 1 042 084.

Selon une variante, le polymère cationique selon l'invention est susceptible d'être obtenu par condensation de dicyandiamide avec du formaldéhyde, puis ajout d'au moins un sel d'ammonium.

De préférence, le ratio molaire entre formaldéhyde et dicyandiamide est compris de 0,8/1 à 4/1.

Selon un exemple de réalisation, le polymère cationique selon l'invention comprend un PolyDadmac ou chlorure de Polydiallyldiméthylammonium.

<u>Traitement</u>

Le traitement des granulats selon l'invention peut être effectué par simple mélange, pulvérisation ou aspersion. On obtient alors un mélange de granulats et du polymère cationique selon l'invention.

Le polymère cationique selon l'invention est utilisé sous forme liquide, avantageusement sous forme de solution aqueuse. Le polymère cationique est de préférence dilué dans un grand volume de solvant, afin de faciliter le traitement des granulats et d'assurer une répartition optimale et un traitement homogène des granulats. La concentration en polymère dans la solution peut alors être inférieure ou égale à 30 %, de préférence inférieure ou égale à 10 % en masse.

Cependant, selon une variante de l'invention, entre la fabrication du polymère cationique et son utilisation pour le procédé selon l'invention, il peut être avantageux de manipuler le polymère cationique selon l'invention sous forme d'une solution concentrée. En effet, compte tenu du poids moléculaire relativement faible des polymères cationiques selon l'invention, il est possible d'utiliser des solutions aqueuses à concentrations élevées en polymère sans problème lié à de fortes viscosités. Il est notamment intéressant d'utiliser des concentrations en polymère élevées pour réduire les coûts (transport, stockage). Selon la présente variante, la concentration en polymère dans la solution peut alors être comprise de 40 et 60 % en masse.

La dilution de la solution en polymère cationique selon l'invention sera ajustée en fonction de la surface totale de granulats à traiter et de la viscosité intrinsèque du polymère cationique.

Le traitement des granulats selon l'invention peut être réalisé avec un polymère cationique seul ou un mélange de polymères cationiques.

De préférence, un mélange est réalisé pendant et/ou après le traitement des granulats afin d'assurer une bonne répartition du polymère cationique selon l'invention, et obtenir un matériau traité de manière homogène.

La pulvérisation peut avoir lieu dans un récipient, par exemple dans une caisse à chicanes à la sortie d'un tapis. Ce mode de réalisation assure en outre une faible perte du produit. En variante, il est envisageable de pulvériser

une solution du polymère cationique selon l'invention dans un mélangeur placé en sortie de bande. Il peut également être envisagé de préparer un pré-mélange d'une petite quantité de granulats avec le polymère cationique selon l'invention puis d'ajouter ce pré-mélange aux autres granulats.

De préférence, le diamètre maximal des granulats selon l'invention peut être inférieur ou égale à 20 mm, avantageusement inférieur ou égal à 15 mm.

Selon une variante, les granulats traités selon le procédé de l'invention peuvent ne pas comprendre tous les granulats de la composition hydrocarbonée. En effet, le traitement de seulement une partie ou de seulement quelques fractions de granulats peut être suffisant pour obtenir l'effet souhaité d'amélioration de l'adhésion entre le liant hydrocarboné et les granulats.

Selon une autre variante du procédé selon l'invention, seuls les sables sont traités. Selon encore une autre variante du procédé selon l'invention seuls les gravillons sont traités. Selon encore une autre variante de l'invention, seules les fines sont traitées.

Les constituants ainsi traités peuvent être utilisés de manière habituelle, notamment pour la préparation de compositions hydrocarbonées.

En particulier, les granulats ainsi traités sont utiles dans la préparation de compositions hydrocarbonées, dans lesquelles les argiles peuvent gêner l'efficacité de l'adhésion du liant hydrocarboné avec les granulats. Ils peuvent être utilisés de manière habituelle pour la préparation de compositions hydrocarbonées.

La composition de polymère cationique selon l'invention est stable dans le temps et résiste à la chaleur et au gel.

La figure 1 représente de façon schématique un exemple de tube capillaire utilisé pour déterminer la viscosité intrinsèque des polymères cationiques selon l'invention. Les références A et B désignent deux repères qui sont utilisés pour mesurer la durée d'écoulement de solutions de polymères à différentes concentrations.

<u>Détermination de la densité de charges cationiques des polymères cationiques</u>

La densité de charges cationiques ou cationicité est la quantité de charges (en mmol) portée par 1g de polymère. Elle est exprimée en milliéquivalent par gramme (meq/g). Cette propriété est mesurée par titration colloïdale par un polymère anionique en présence d'un indicateur coloré sensible à l'ionicité du polymère en excès.

Dans le cas présent, il s'agit de doser le polymère cationique d'ionicité inconnue, après l'avoir fortement dilué, par un polymère anionique connu en présence d'un indicateur coloré (colorant cationique). Ce colorant est le bleu d'orthotoluidine et possède la caractéristique de ne pas être de la même couleur en présence de polymères anioniques ou de polymères cationiques en excès. Ainsi en présence de polymères cationiques en excès, la solution de colorant est bleue.

Le polymère cationique est ensuite dosé par un polymère anionique d'ionicité connue (le polyvinyl sulfonate de potassium). Compte tenu de l'affinité des macromolécules de charges opposées, les polymères vont précipiter instantanément. Lorsque le polymère cationique est totalement consommé, un ajout de polymère anionique provoque un excès de ce polymère. La couleur de la solution vire alors du bleu au violet. Le virage de couleur correspond à la neutralisation de toutes les charges cationiques du polymère. Le volume du polymère anionique utilisé et sa concentration permettent alors de calculer la cationicité du polymère cationique. En effet, à l'équivalence, le nombre de moles de charges négatives est égale au nombre de moles de charges positives.

Dans les exemples ci-après, la cationicité a été déterminée de la manière suivante. Dans un récipient adapté, on introduit 60 ml d'une solution tampon de phosphate de sodium à 0,001 M - pH6 et 1 ml de solution de bleu d'orthotoluidine ayant une concentration de 4,1 x $10^{-4}$ M puis 0,5 ml de solution de polymère cationique à doser.

Cette solution est titrée avec une solution de polyvinyle sulfate de potassium jusqu'à virage de la couleur de l'indicateur.

On obtient la cationicité par la relation suivante :

$$\text{Cationicité (meq/g)} = (V_{epvsk} * N_{pvsk}) / (V_{pc} * C_{pc})$$

Dans laquelle :

$V_{pc}$ est le volume de solution du polymère cationique en millilitre ;
$C_{pc}$ est la concentration du polymère cationique en solution en gramme par millilitre ;
$V_{epvsk}$ est le volume de solution de polyvinyle sulfate de potassium en millilitre ; et
$N_{pvsk}$ est la normalité de la solution de polyvinyle sulfate de potassium en milliéquivalent par millilitre.

Mesure de la viscosité intrinsèque des polymères cationiques

Il existe une relation définie entre le poids moléculaire d'un polymère et la viscosité d'une solution de ce même polymère à une température donnée. Plus le poids moléculaire est élevé, plus la solution est visqueuse.

Cette mesure de viscosité est réalisée par mesure de la durée nécessaire à la solution de polymère pour traverser un tube calibré entre les repères A et B (voir figure 1). Les dimensions du tube sont ajustées de façon que l'écoulement des solutions ne soit ni trop rapide, afin d'être suffisamment précis dans les mesures, ni trop lent, afin que les mesures ne prennent pas trop de temps. Toutefois, le diamètre du tube n'a pas d'influence sur le résultat final de mesure de la viscosité.

Cette méthode nécessite plusieurs étapes qui sont les suivantes :

- préparer des solutions de polymère cationique à différentes concentrations ;
- mesurer la durée d'écoulement dans le tube capillaire entre les deux repères A et B (voir figure 1) pour le solvant et chaque solution du polymère à différentes concentrations ;
- déterminer la viscosité spécifique pour chaque concentration en divisant la différence entre les durées d'écoulement de la solution de polymère et du solvant, par la durée d'écoulement du solvant ;
- déterminer la viscosité réduite en divisant la viscosité spécifique par la concentration de la solution de polymère ; et
- déterminer la viscosité intrinsèque en traçant la courbe de la viscosité réduite en fonction de la concentration de la solution de polymère. On obtient une droite. L'intersection avec l'ordonnée de cette droite correspond à la viscosité intrinsèque pour une concentration égale à zéro.

La viscosité intrinsèque est directement reliée au poids moléculaire par l'équation de Mark-Houwink suivante :

$$\eta \text{ intrinsèque} = K' \times M^a$$

K' et a sont les constantes de Mark-Houwink. Elles sont spécifiques à chaque couple solvant/polymère. M est la masse molaire du polymère en gramme par mole.

Les mesures de viscosité intrinsèque des polymères cationiques sont généralement réalisées dans une solution NaCl 3M, avec un viscosimètre capillaire de type Ubbelhode, à 25°C.

Détermination de l'adhésivité passive entre les liants hydrocarbonés et les granulats

Les essais sont réalisés selon la norme XP T 66-043, qui prescrit une méthode de détermination de l'adhésivité passive entre les liants et les granulats en présence d'eau. Elle s'applique à tous les liants anhydres et à tous les granulats.

Les granulats propres et secs sont enrobés avec le liant hydrocarboné. Les granulats enrobés sont immergés dans l'eau dans des conditions déterminées. La valeur de l'adhésivité passive est déterminée par le pourcentage évalué par simple observation à l'oeil nu de la surface des granulats restant recouverte de liant hydrocarboné après un certain temps d'immersion.

Le traitement des granulats avec le polymère cationique selon l'invention est réalisé avec un ajout de 10 g d'eau pour permettre une bonne répartition du polymère à la surface des granulats.

100 g de chaque type de granulats sont lavés et séchés pendant 24 heures à 110°C, puis traités avec une solution concentrée de polymère cationique selon l'invention. Pour chaque type de granulats, plusieurs essais sont réalisés en faisant varier le dosage de polymère cationique selon l'invention.

Après le traitement par le polymère cationique selon l'invention, les granulats sont déposés dans une étuve à 170°C pendant 3 heures. Le liant hydrocarboné est également placé dans les mêmes conditions. Au bout de 3 heures, 100 g de chaque échantillon sont enrobés avec 5 g de liant hydrocarboné par simple mélange pendant 1 minute. Au bout de cette minute, les échantillons sont à nouveau placés dans une étuve pendant 5 minutes. Ensuite, ils sont à nouveau malaxés afin d'assurer un bon enrobage. Une fois l'enrobage achevé, les échantillons sont refroidis pendant 24 heures à 20°C. Au bout de 24 heures, chaque échantillon est immergé dans 300 g d'eau déminéralisée pendant 16 heures dans une enceinte climatique à 60°C et 100 % d'humidité relative. Les échantillons sont ensuite séchés à 20°C.

Les résultats sont exprimés suivant la norme XP T 66-043 (voir notamment l'annexe B : Guide de notation en fonction de la surface granulaire) en pourcentage de surface granulaire restant recouverte d'un film de liant hydrocarboné, selon la notation suivante :

a) aucune surface n'est découverte ;
b) plus de 90 % de la surface des granulats reste couverte ; seules les arêtes des granulats sont dépourvues de

liant hydrocarboné ;
c) de 75 à 80 % de la surface des granulats reste couverte ;
d) de 50 à 75 % de la surface des granulats reste couverte ;
e) moins de 50 % de la surface des granulats reste couverte ;
f) le liant hydrocarboné est quasiment séparé des granulats ; seuls quelques petits globules subsistent.

De préférence, il est souhaitable pour un granulat que la note selon la norme XP T 66-043 ne soit pas e ou f, et de préférence ne soit pas d, e ou f.

Détermination de la qualité des compositions hydrocarbonées : essai « Duriez »

La qualité des compositions hydrocarbonées peut notamment être vérifiée via la tenue à l'eau desdites compositions. En France, la tenue à l'eau d'une composition hydrocarbonée est déterminée par l'essai « Duriez » (voir la norme NF P98-251-1).
Ce test consiste en des mesures de résistances en compression après conservation à l'air à 18°C et à 50% d'hygrométrie pendant 7 jours, et des mesures des résistances en compression après immersion dans des conditions spécifiées (conservation dans l'eau à 18°C pendant 7 jours). La tenue à l'eau de la composition hydrocarbonée s'exprime par le rapport des résistances mécaniques selon les deux modes de conservation :

Tenue à l'eau « r/R » = résistance après immersion / Résistance sans immersion

Les normes françaises imposent un r/R supérieur à 0,65 pour les graves bitumineux, et supérieur à 0,70 pour les bétons bitumineux.

Détermination de la propreté des sables

La propreté des sables peut être déterminée par la « valeur au bleu de méthylène ». La valeur au bleu de méthylène est un test normalisé qui permet d'estimer la propreté d'un sable en « évaluant » la nocivité des impuretés présentes. Cette technique (cf. Norme EN 933-9) est sensible à la présence des argiles.
Rappelons le principe de ce test. Il s'agit de mettre en contact un colorant cationique (voir formule 1 ci-dessous), le bleu de méthylène et le sable à analyser. Le colorant cationique est adsorbé sur l'argile jusqu'à saturation des sites anioniques portés par celle-ci. La valeur au bleu de méthylène correspond à la quantité de colorant adsorbé à saturation sur les particules présentes dans la fraction 0-2 mm contenue dans le sable.

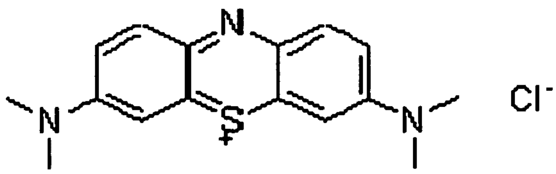

Formule 1 : formule développée du bleu de méthylène

Notons que, d'après les normes, les valeurs au bleu de méthylène doivent être inférieures à 2 g, 2,5 g ou 3 g de colorant par kilogramme de sable en fonction de l'application visée (voir normes NF EN 13043 et XP P 18545 chapitres 8 et 9).
Les exemples suivants illustrent l'invention sans en limiter la portée.

**EXEMPLES**

**Exemple 1 : Validation de l'effet du traitement des granulats par le polymère**

**cationique selon l'invention**

Les essais sont réalisés selon la norme XP T 66-043, qui prescrit une méthode de détermination de l'adhésivité

passive entre les liants et les granulats en présence d'eau. Cette méthode est décrite ci-dessus.

Le liant hydrocarboné utilisé est un bitume de classe 35/50 (Fournisseur : Shell).

Le polymère cationique utilisé est le FL2260 (Fournisseur : SN F).

Le tableau 1 répertorie les trois types de granulats qui sont utilisés pour le présent exemple.

**Tableau 1** : Nature, taille et désignation des granulats

| Nature | Taille | Désignation |
|---|---|---|
| Gravillons siliceux (rhyolite) | Diamètre compris de 6 à 10 mm | A |
| Gravillons siliceux (alluvionnaire) | Diamètre compris de 6 à 10 mm | B |
| Gravillons siliceux (quartz) | Diamètre compris de 6 à 10 mm | C |

La solution de polymère cationique selon l'invention utilisée pour le traitement des granulats dans le présent exemple est diluée à 2,4 % en masse de polymère sec par rapport à la masse totale de solution.

Les essais sont réalisés pour les dosages suivants en polymère cationique selon l'invention par rapport à la surface spécifique développée par les granulats : 0 ; 0,08 ; 0,16 ; 0,2 et 0,4 g par mètre carré de surface spécifique développée par les granulats. Le tableau 2 ci-dessous présente les résultats obtenus.

**Tableau 2** : Résultats de l'essai d'adhésivité passive selon la norme XP T 66-043

| Dosage polymère cationique selon l'invention sec en g/m$^{2*}$ (ppm**) | 0 | 0,08 (20) | 0,16 (40) | 0,2 (50) | 0,4 (100) |
|---|---|---|---|---|---|
| A | d | c | b | b | a |
| B | e | d | d | b | b |
| c | e | d | c | b | c |
| * gramme de polymère par mètre carré de surface spécifique développée par les granulats<br>** partie par million (en masse) de la masse des granulats. Par exemple, 100 ppm correspondent à 100 g de matière active (sèche) de polymère cationique selon l'invention pour 1 000 000 g de granulats | | | | | |

D'après le tableau 2, l'effet positif du polymère cationique selon l'invention sur l'adhésion liant hydrocarboné/granulats est déjà visible pour des dosages aussi faibles que 0,08 g par mètre carré de surface spécifique développée par les granulats. En effet, les notations d'adhésion s'améliorent pour tous les échantillons à partir de ce très faible dosage en polymère cationique selon l'invention. Par exemple, la notation passe de « d » à « c » pour l'échantillon A entre le témoin et l'échantillon selon l'invention comprenant 0,08 g par mètre carré de surface spécifique développée par les granulats de polymère cationique. Ou encore, la notation d'adhésivité passive passe de « e » à « d » pour l'échantillon C entre le témoin et l'échantillon selon l'invention comprenant 0,08 g par mètre carré de surface spécifique développée par les granulats de polymère cationique.

Globalement, les résultats du tableau 2 montrent que l'adhésion liant hydrocarboné/granulats s'améliore avec l'augmentation du dosage en polymère cationique selon l'invention.

**Exemple 2 : Validation de la limite maximale du dosage en polymère cationique selon l'invention**

Les protocoles de traitement des granulats par le polymère cationique selon l'invention, d'enrobage avec le liant hydrocarboné et de mesure de l'efficacité du traitement des granulats sur l'adhésion liant hydrocarboné/granulats sont pratiquement les mêmes que dans l'exemple précédent. La différence est que la solution de polymère cationique selon l'invention utilisée pour le traitement des granulats dans le présent exemple est à 62,4 % en masse de polymère sec par rapport à la masse totale de solution.

Les granulats utilisés sont du quartz dont le diamètre est compris de 6 à 10 mm et du grès dont le diamètre est compris de 6 à 10 mm.

Le polymère cationique utilisé est le FL2260 (Fournisseur : SNF).

Les tableaux 3 et 4 ci-dessous montrent les dosages en matière sèche et en matière diluée correspondant aux essais réalisés.

**Tableau 3** : Désignation et dosage en polymère cationique selon l'invention des échantillons en quartz

| Désignation échantillon | Qref | Q250 | Q500 | Q750 | Q1000 |
|---|---|---|---|---|---|
| Dosage en polymère cationique selon l'invention (62,4 % extrait sec) (g) | 0 | 0,04 | 0,08 | 0,12 | 0,16 |
| Dosage en matière sèche (ppm) | 0 | 250 | 500 | 750 | 1000 |
| Dosage en matière sèche (g/m$^{2*}$) | 0 | 1 | 2 | 3 | 4 |
| * gramme de polymère par mètre carré de surface spécifique développée par les granulats | | | | | |

**Tableau 4** : Désignation et dosage en polymère cationique selon l'invention des échantillons en grès

| Désignation échantillon | Gref | G250 | G500 | G750 | G1000 |
|---|---|---|---|---|---|
| Dosage en polymère cationique selon l'invention (62,4 % extrait sec) (g) | 0 | 0,04 | 0,08 | 0,12 | 0,16 |
| Dosage en matière sèche (ppm) | 0 | 250 | 500 | 750 | 1000 |
| Dosage en matière sèche (g/m$^{2*}$) | 0 | 1 | 2 | 3 | 4 |
| * gramme de polymère par mètre carré de surface spécifique développée par les granulats | | | | | |

Les tableaux 5 et 6 montrent les résultats obtenus d'adhésivité passive selon la norme XP T 66-043.

**Tableau 5** : Résultats expérimentaux des échantillons en quartz

| Quartz | Qref | Q250 | Q500 | Q750 | Q1000 |
|---|---|---|---|---|---|
| Note | c | d | d | e | e |

**Tableau 6** : Résultats expérimentaux des échantillons en grès

| Grès | Gref | G250 | G500 | G750 | G1000 |
|---|---|---|---|---|---|
| Note | b | b | c | d | d |

D'après les tableaux 5 et 6, on constate une augmentation du désenrobage avec l'augmentation du dosage en polymère cationique selon l'invention à partir de 1 g par mètre carré de surface spécifique développée par les granulats. Par exemple, l'échantillon Q250 obtient une notation d'adhésivité passive « d », alors que l'échantillon Q1000 une notation « e ». De même, l'échantillon G250 obtient une notation « b », alors que l'échantillon G1000 une notation « d ». Par conséquent, l'utilisation d'une quantité supérieure ou égale à 1 g par mètre carré de surface spécifique développée par les granulats de polymère cationique selon l'invention semble avoir un effet négatif sur l'adhésion liant hydrocarboné/granulats.

D'autre part, on peut constater que le désenrobage est moins important pour les échantillons en grès que pour les échantillons en quartz. En effet, il y a déjà une différence entre les échantillons de référence (« c » pour Qref et « b » pour Gref). Ensuite, on constate qu'un dosage de 1 g par mètre carré de surface spécifique développée par les granulats de polymère cationique selon l'invention semble être néfaste pour l'adhésion liant hydrocarboné/granulats des échantillons en quartz, alors que l'effet négatif du polymère cationique selon l'invention sur l'adhésion liant hydrocarboné/granulats ne se manifeste qu'à partir d'un dosage de 2 g par mètre carré de surface spécifique développée par les granulats pour les échantillons en grès. La quantité maximale de polymère cationique selon l'invention que l'on peut ajouter aux granulats semble donc variable en fonction de la nature des granulats à traiter.

Les exemples 1 et 2 montrent que l'adhésion liant hydrocarboné/granulats est améliorée pour un dosage en polymère cationique selon l'invention non nul et inférieur à un seuil qui expérimentalement a été trouvé à environ 0,8 g par mètre carré de surface spécifique développée par les granulats. Pour cette plage de dosage en polymère cationique selon l'invention, on a une notation selon la norme XP T 66-043 qui n'est ni e ni f, alors qu'en l'absence de polymère cationique selon l'invention ou pour un dosage de polymère cationique selon l'invention supérieur à 0,8 g par mètre

carré de surface spécifique développée par les granulats, on peut avoir un note égal à e. En outre, ce résultat est obtenu pour une catégorie particulière de polymère cationique selon l'invention défini par une densité de charges cationiques supérieure ou égale à 0,5 meq/g et une viscosité intrinsèque comprise de 0,01 à 0,8 dl/g.

**Exemple 3 : Validation de l'effet du traitement des granulats par un autre exemple de polymère cationique selon l'invention**

Les essais sont réalisés selon la norme XP T 66-043. Cette méthode est décrite ci-dessus.
Le liant hydrocarboné utilisé est un bitume de classe 35/50 (Fournisseur : Shell).
Le polymère cationique utilisé est un PolyDadmac (référence DP/CR 2780, Fournisseur : SNF).
La solution de polymère cationique selon l'invention utilisée pour le traitement des granulats dans le présent exemple est diluée à 10 % en masse de polymère PolyDadmac sec par rapport à la masse totale de solution.
Les gravillons utilisés correspondent aux gravillons C du tableau 1.
Les essais sont réalisés pour les dosages suivants en polymère cationique PolyDadmac selon l'invention par rapport à la surface spécifique développée par les granulats : 0, 0,16 et 0,32 g par mètre carré de surface spécifique développée par les granulats. Le tableau 7 ci-dessous présente les résultats obtenus.

**Tableau 7** : Résultats de l'essai d'adhésivité passive selon la norme XP T 66-043

| Dosage polymère cationique selon l'invention sec en g/m$^{2*}$ (ppm**) | 0 | 0,16 (40) | 0,32 (80) |
|---|---|---|---|
| C | e | d | d |
| * gramme de polymère par mètre carré de surface spécifique développée par les granulats<br>** partie par million (en masse) de la masse des granulats. Par exemple, 100 ppm correspondent à 100 g de matière active (sèche) de polymère cationique selon l'invention pour 1 000 000 g de granulats | | | |

D'après le tableau 7, les notations d'adhésion s'améliorent dès l'ajout du polymère cationique PolyDadmac selon l'invention, la notation passant de « e » pour l'échantillon ne comprenant pas de polymère PolyDadmac à « d » pour les échantillons selon l'invention comprenant 0,016 g et 0,032 g par mètre carré de surface spécifique développée par les granulats de polymère cationique.
Globalement, les résultats du tableau 7 montrent que l'adhésion liant hydrocarboné/granulats s'améliore en présence du polymère cationique PolyDadmac selon l'invention.

**Exemple 4 : Evaluation des granulats et des compositions hydrocarbonées selon l'invention avec pollution par des argiles**

Plusieurs granulats de différentes natures ont été pollués par des argiles par simple mélange, traités par un polymère cationique selon l'invention et utilisés pour la fabrication de compositions hydrocarbonées. Des compositions hydrocarbonées de référence ont été fabriquées en utilisant les mêmes granulats sans pollution par des argiles. Des essais « Duriez » ont ensuite été réalisés selon le protocole tel que décrit ci-avant pour évaluer l'efficacité du polymère cationique selon l'invention pour cette application spécifique ainsi que l'effet sur la tenue à l'eau des compositions hydrocarbonées réalisées.
Les granulats traités sont les suivants :

- Sable siliceux de Pontreaux présentant une valeur au bleu de méthylène avant ajout d'argile de 0,5 g de bleu/kg de sable) (Fournisseur : Lafarge)
- Sable Calcaire de Cassis présentant une valeur au bleu de méthylène avant ajout d'argile de 0,6 g de bleu/kg de sable) (Fournisseur : Lafarge)

**Tableau 8** : Granulométrie des sables traités

| **Tamis (mm)** | **0,063** | **0,08** | **0,2** | **0,315** | **0,4** | **0,5** | **0,63** | **1** | **2** | **3,15** | **4** |
|---|---|---|---|---|---|---|---|---|---|---|---|
| **Sable siliceux 1** | 11,7 | 12,9 | 20 | 26 | 30 | 35 | 40 | 53 | 81 | 99,3 | 100 |

(suite)

| Tamis (mm) | 0,063 | 0,08 | 0,2 | 0,315 | 0,4 | 0,5 | 0,63 | 1 | 2 | 3,15 | 4 |
|---|---|---|---|---|---|---|---|---|---|---|---|
| **Sable siliceux 2** | 8,8 | 9,7 | 16 | 21 | 25 | 28 | 32 | 44 | 75 | 98,9 | 100 |
| **Sable calcaire 1** | 16,2 | 19,3 | 27 | 35 | 39 | 45 | 53 | 70 | 97 | 99,8 | 100 |
| **Sable calcaire 2** | 15,9 | 17,4 | 27 | 34 | 39 | 44 | 53 | 68 | 97 | 99,9 | 100 |

Les valeurs sont exprimées en pourcentage massique cumulé de particules passant à travers les différents tamis. A partir de ce tableau, une courbe granulométrique peut être tracée (pourcentage massique cumulé de particules passant à travers les tamis en fonction de la taille des tamis en mm). Ce tableau et cette courbe peuvent notamment permettre de déterminer les pourcentages massiques de chacune des fractions de granulats. Les sables traités sont appelés dans le présent exemple « sables 0/4 ».

Les tests ont été réalisés avec 8 formulations telles que décrites dans le tableau 9 ci-dessous. La notation « GB » correspond à une formulation de grave-bitume et « BB » à une formulation de béton bitumineux. Toutes les formules ont été calées granulométriquement et en teneur en liant hydrocarboné pour obtenir des modules de richesse constants.

Les gravillons sont des tufs rhyolitiques issus de la carrière de Rivolet.

Le liant hydrocarboné est un bitume pur de classe 35/50 (Fournisseur : Shell).

**Tableau 9 :** Formulations réalisées dans le présent exemple

| Formulation | Sable 0/4 | Gravillons 2/6(*) | Gravillons 6/10 (**) | Gravillons 10/14 (***) | Liant hydrocarboné |
|---|---|---|---|---|---|
| **GB1** | 48,1 % sable siliceux 1 | 9,6% | 19,3 % | 19,3 % | 3,7 % |
| **BB1** | 47,5 % sable siliceux 1 | 14,3 % | 33,3 % | - | 4,9 % |
| **GB2** | 48,1 % sable siliceux 1 | 9,6% | 19,2 % | 19,2 % | 3,9 % |
| **BB2** | 47,4 % sable siliceux 2 | 14,2 % | 33,2 % | - | 5,2 % |
| **GB3** | 48,0 % sable calcaire 2 | 9,6 % | 19,2 % | 19,2 % | 4,0 % |
| **BB3** | 47,3 % sable calcaire 2 | 14,2 % | 33,1 % | - | 5,4 % |
| **GB4** | 44,1 % sable calcaire 1 | 11,5 % | 20,2 % | 20,2% | 4,0 % |
| **BB4** | 43,5 % sable calcaire 1 | 16,1 % | 35 % | - | 5,4 % |
| (*) 2/6 signifie que les gravillons ont une granulométrie comprise de 2 à 6 mm.<br>(**) 6/10 signifie que les gravillons ont une granulométrie comprise de 6 à 10 mm.<br>(***) 10/14 signifie que les gravillons ont une granulométrie comprise de 10 à 14 mm. | | | | | |

Les pourcentages sont des pourcentages massiques par rapport à la masse totale de la formulation.

Les formulations décrites dans le tableau 9 ci-dessus sont réalisées selon le protocole suivant :

- chauffage des granulats et du liant hydrocarboné dans une étuve jusqu'à une température de 170°C ± 5°C ; et
- malaxage des granulats et du liant hydrocarboné préalablement chauffés dans un malaxeur chauffant réglé à une

température de 170°C ± 5°C pendant 1 min 30.

Les formulations ainsi obtenues sont compactées dans des moules cylindriques pendant 5 minutes en suivant les règles ci-dessous :

- pour les bétons bitumineux : moule de 80 mm de diamètre, charge de compactage de 60 kN et masse de l'éprouvette obtenue de 1000 g : et
- pour les graves-bitumes : moule de 120 mm de diamètre, charge de compactage de 120 kN et masse de l'éprouvette obtenue de 3500 g.

Le polymère cationique utilisé pour le traitement des sables est le FL2260 (Fournisseur : SNF).
Le traitement du sable est réalisé selon le protocole suivant :

- 30 kg de sable 0/4 sont mélangés avec le polymère cationique selon l'invention dans les proportions décrites dans le tableau 10 ci-dessous dans un mixer de type Raynerie pendant 5 minutes à vitesse 1 ; et
- le mélange obtenu est séché dans une étuve à une température de 60-70°C.

Le tableau 10 suivant présente les résultats obtenus des essais Duriez.

**Tableau 10** : Résultats des essais Duriez réalisés sur deux types de granulats

| **Formulation** | **Pollution par Montmorillonite** (pourcentage massique par rapport à la masse de granulats pollués) | **Traitement par le polymère cationique selon l'invention** (pourcentage massique de polymère sec par rapport à la masse de granulats traités) | **7 jours** | **14 jours** | **7 jours** | **14 jours** |
|---|---|---|---|---|---|---|
| | | | **Grave-bitume (GB)** | | **Béton bitumineux (BB)** | |
| GB1 et BB1 | 2% | Aucun | 0,63 | 0,52 | 0,85 | 0,70 |
| GB2 et BB2 | 2% | 0,1 % | 0,96 | 0,9 | 0,85 | 0,81 |
| GB3 et BB3 | 2% | Aucun | 0,74 | 0,64 | 0,81 | 0,71 |
| GB4 et BB4 | 2% | 0,12 % | 0,97 | 0,92 | 0,94 | 0,84 |

Pour rappel, les normes françaises imposent un r/R supérieur à 0,65 pour les graves bitumineux, et supérieur à 0,70 pour les bétons bitumineux.
D'après le tableau 10, on constate que pour un sable siliceux sans traitement (GB1 et BB1), les valeurs obtenues par l'essai Duriez sont inférieures à 0,65 pour le grave bitumineux à 14 jours (0,52) et sont justes à la limite de 0,70 pour le béton bitumineux à 14 jours (0,70). Au contraire, les valeurs sont largement au-dessus des limites fixées par les normes pour le sable siliceux traité avec le polymère cationique selon l'invention (GB2 et BB2 : 0,9 pour le grave bitumineux à 14 jours et 0,81 pour le béton bitumineux à 14 jours).
D'autre part, dans le cas d'un sable calcaire sans traitement (GB3 et BB3), les valeurs obtenues par le test Duriez sont juste à la limite des valeurs fixées par les normes à 14 jours (0,64 pour le grave bitumineux à 14 jours et 0,71 pour le béton bitumineux). Au contraire, les valeurs sont largement au-dessus des limites fixées par les normes pour le sable calcaire traité avec le polymère cationique selon l'invention (GB4 et BB4 : 0,92 pour le grave bitumineux à 14 jours et 0,84 pour le béton bitumineux à 14 jours)
Par conséquent, il est possible d'utiliser des sables pollués par 2% de montmorillonite, qui ont une valeur au bleu de méthylène égale à 4 après pollution, pour obtenir des compositions hydrocarbonées ayant une tenue à l'eau satisfaisante grâce au polymère cationique selon l'invention.
Il est donc possible d'utiliser des granulats qui ne seraient pas utilisables, notamment à cause de la présence d'argiles, et donc à cause d'une valeur au bleu de méthylène trop élevée par rapport aux exigences des normes. La tenue à l'eau est améliorée dans tous les cas grâce au procédé selon l'invention.
L'exemple 4 montre qu'avec le traitement des sables par un polymère cationique selon l'invention pour un dosage d'environ 0,1 % (soit environ 0,03 g par mètre carré de surface spécifique développée par les granulats), on obtient une amélioration des valeurs d'essais Duriez de compositions hydrocarbonées comprenant les granulats pollués

par des argiles et traités par rapport à des compositions hydrocarbonées comprenant des granulats pollués par des argiles et non traités.

**Exemple 5 : Evaluation des granulats et de compositions hydrocarbonées selon l'invention**

Des compositions hydrocarbonées ont été fabriquées et des essais « Duriez » ont ensuite été réalisés selon le protocole tel que décrit ci-avant pour évaluer l'efficacité du polymère cationique selon l'invention pour cette application spécifique ainsi que l'effet sur la tenue à l'eau des compositions hydrocarbonées réalisées.

Les granulats traités sont les suivants :

- Sable fin 0/2 mm présentant une valeur au bleu de méthylène avant traitement de 2,2 g de bleu/kg de sable (Fournisseur : Lafarge, site de Bréfauchet)
- Gravillon 6/10 mm (Fournisseur : Lafarge, site de Bréfauchet)

**Tableau 11** : Granulométrie des granulats traités

| Tamis (mm) | Sable fin 0/2 mm | Gravillon 6/10 mm |
|---|---|---|
| 20 | 100 | 100 |
| 16 | 100 | 100 |
| 14 | 100 | 100 |
| 12,5 | 100 | 99,9 |
| 10 | 100 | 95,1 |
| 8 | 100 | 54,1 |
| 6,3 | 100 | 11,7 |
| 5 | 100 | 6,1 |
| 4 | 99,9 | 2,7 |
| 2 | 87,4 | 2,2 |
| 1 | 59,9 | 1,8 |
| 0,315 | 39,4 | 1,7 |
| 0,250 | 33,5 | 1,7 |
| 0,125 | 24,5 | 1,6 |
| 0,080 | 18,6 | 1,5 |
| 0,063 | 16,0 | 1,4 |

Les valeurs sont exprimées en pourcentage massique cumulé de particules passant à travers les différents tamis. Les sables traités sont appelés dans le présent exemple « sables 0/2 ».

Les tests ont été réalisés avec une formulation de béton bitumineux telle que décrite dans le tableau 12 ci-dessous. Il s'agit d'un exemple de formulation du type béton bitumineux mince type A avec une discontinuité de granulométrie entre 2 et 6 mm. Ce type de béton bitumineux est utilisé notamment pour réaliser des couches de roulement ayant une épaisseur de 3 à 5 cm.

Le liant hydrocarboné est un bitume pur de classe 40/60 (Fournisseur : Shell)

**Tableau 12** : Formulation réalisée dans le présent exemple

| Formulation | Sable 0/2 (*) | Gravillons 6/10(**) | Liant hydrocarboné |
|---|---|---|---|
| **BB5 et BB6** | 36% | 58,8 % | 5,2 % |
| (*) 0/2 signifie que le sable a une granulométrie comprise de 0 à 2 mm.<br>(**) 6/10 signifie que les gravillons ont une granulométrie comprise de 6 à 10 mm. | | | |

Les pourcentages sont des pourcentages massiques par rapport à la masse totale de la formulation.

Les enrobés bitumineux selon la formulation décrite dans le tableau 12 sont réalisés selon le protocole suivant :

- chauffage des granulats et du liant hydrocarboné dans une étuve jusqu'à une température de 170°C ± 5°C ; et
- malaxage des granulats et du liant hydrocarboné préalablement chauffés dans un malaxeur chauffant réglé à une température de 170°C ± 5°C pendant 1 min 30.

Les enrobés bitumineux obtenus sont compactés dans des moules cylindriques pendant 5 minutes. Les moules ont un 80 mm de diamètre. La charge de compactage utilisée est de 60 kN et la masse de l'éprouvette obtenue est de 1000 g.

Le polymère cationique utilisé pour le traitement du sable et des gravillons est le FL2260 (Fournisseur : SNF).

Le traitement du sable est réalisé selon le protocole suivant :

- le sable 0/2 est mélangé avec le polymère cationique selon l'invention dans les proportions décrites dans le tableau 13 ci-dessous dans un mixer de type Raynerie pendant 5 minutes à vitesse 1 ; et
- le mélange obtenu est séché dans une étuve à une température de 105°C.

Le traitement des gravillons est réalisé séparément du sable de façon analogue au traitement du sable.

Le tableau 13 suivant présente les résultats obtenus des essais Duriez.

**Tableau 13** : Résultats des essais Duriez réalisés sur deux types de granulats

| Formulation | **Traitement par le polymère cationique selon l'invention** (pourcentage massique de polymère sec par rapport à la masse de granulats traités) | 7 jours | 14 jours |
|---|---|---|---|
| BB1 | Aucun | 0,94 | 0,83 |
| BB5 | 0,05 % pour le sable (500 ppm) 0,01 % pour les gravillons (100 ppm) | 0,92 | 0,90 |

Pour rappel, les normes françaises imposent un r/R supérieur à 0,8 pour les bétons bitumineux mince de type A.

D'après le tableau 13, on constate que la valeur obtenue pour le béton bitumineux BB5 à granulats traités à 14 jours (0,90) est supérieure à la valeurs obtenue pour le béton bitumineux BB4 à granulats non traités (0,83) à 14 jours.

Si pour les essais Duriez, le rapport r/R est déterminé en utilisant pour la valeur R la résistance en compression du béton bitumineux sans immersion et à granulats non traités, on obtient pour le béton bitumineux BB5 une valeur r/R de 1,11 à 7 jours et de 1,08 à 14 jours. Le traitement selon l'invention permet donc d'obtenir des granulats traités dont la valeur de résistance après immersion est très proche de celle obtenue sans traitement et sans immersion.

L'exemple 5 montre qu'avec le traitement des sables par un polymère cationique selon l'invention pour un dosage d'environ 0,05 % (soit environ 0.037 g par mètre carré de surface spécifique développée par les granulats) et le traitement des gravillons par un polymère cationique selon l'invention pour un dosage d'environ 0,01 % soit environ 0.74 g par mètre carré de surface spécifique développée par les granulats), on obtient en outre des compositions hydrocarbonées comprenant les granulats traités et ayant subi une immersion ayant sensiblement les mêmes résistances que des compositions hydrocarbonées comprenant des granulats non traités et n'ayant pas subi d'immersion.

## Revendications

1. Procédé de fabrication d'une composition hydrocarbonée, comprenant les étapes suivantes :

(ii) réaliser un mélange de granulats de diamètre maximal non nul et inférieur ou égal à 30 mm et d'une quantité inférieure ou égale à 0,8 g par mètre carré de surface spécifique développée par les granulats d'au moins un polymère cationique sous forme liquide ayant une densité de charges cationiques supérieure ou égale à 0,5 meq/g et une viscosité intrinsèque comprise de 0,01 à 0,8 dl/g, la viscosité intrinsèque étant mesurée à 25°C dans une solution NaCl 3M, avec un viscosimètre capillaire de type Ubbelhode, la surface spécifique ($\Sigma_{sp}$) développée par les granulats étant déterminée selon la formule (I) suivante :

$$\Sigma_{sp} = (0{,}0025 \times G) + (0{,}023 \times S) + (0{,}12 \times s) + (1{,}35 \times f) \qquad \text{Formule (I)}$$

dans laquelle :

*G* est le pourcentage massique des granulats dont le diamètre est compris de 6,3 à 30 mm ;
*S* est le pourcentage massique des granulats dont le diamètre est compris de 0,315 à moins de 6,3 mm ;
*s* est le pourcentage massique des granulats dont le diamètre est compris de 0,08 à moins de 0,315 mm ;
*f* est le pourcentage massique des granulats dont le diamètre est strictement inférieur à 0,08 mm ; et

(ii) mettre en contact le mélange obtenu à l'étape (i) avec au moins un liant hydrocarboné.

**2.** Procédé selon la revendication 1, dans lequel le mélange obtenu à l'étape (i) comprend une quantité de polymère cationique supérieure ou égale à 0,0001 g par mètre carré de surface spécifique développée par les granulats.

**3.** Procédé selon la revendication 1 ou 2, dans lequel le polymère cationique comprend des groupes amine quaternaire et/ou des groupes amine protonée.

**4.** Procédé selon l'une quelconque des revendications précédentes, dans lequel le polymère cationique est susceptible d'être obtenu par :

- condensation d'épichlorhydrine avec une dialkylamine ; ou
- condensation d'épichlorhydrine avec une monoalkylamine, suivie d'une protonation.

**5.** Procédé selon l'une quelconque des revendications précédentes, dans lequel le polymère cationique est susceptible d'être obtenu par condensation de dicyandiamide avec du formaldéhyde, puis ajout d'au mois un sel d'ammonium.

**6.** Procédé selon la revendication 5, dans lequel le ratio molaire entre formaldéhyde et dicyandiamide est compris de 0,8/1 à 4/1.

**7.** Composition hydrocarbonée comprenant au moins un liant hydrocarboné, des granulats de diamètre maximal non nul et inférieur ou égal à 30 mm et une quantité inférieure ou égale à 0,8 g par mètre carré de surface spécifique développée par les granulats d'au moins un polymère cationique ayant une densité de charges cationiques supérieure ou égale à 0,5 meq/g et une viscosité intrinsèque comprise de 0,01 à 0,8 dl/g, la viscosité intrinsèque étant mesurée à 25°C dans une solution NaCl 3M, avec un viscosimètre capillaire de type Ubbelhode, la surface spécifique ($\Sigma_{sp}$) développée par les granulats étant déterminée selon la formule (I) suivante :

$$\Sigma_{sp} = (0{,}0025 \times G) + (0{,}023 \times S) + (0{,}12 \times s) + (1{,}35 \times f) \qquad \text{Formule (I)}$$

dans laquelle :

*G* est le pourcentage massique des granulats dont le diamètre est compris de 6,3 à 30 mm;
*S* est le pourcentage massique des granulats dont le diamètre est compris de 0,315 à moins de 6,3 mm ;
*s* est le pourcentage massique des granulats dont le diamètre est compris de 0,08 à moins de 0,315 mm ;
*f* est le pourcentage massique des granulats dont le diamètre est strictement inférieur à 0,08 mm.

**8.** Utilisation d'au moins un polymère cationique sous forme liquide pour le traitement de surface de granulats de diamètre maximal non nul et inférieur ou égal à 30 mm destinés à la préparation d'une composition hydrocarbonée, ledit polymère cationique ayant une densité de charges cationiques supérieure ou égale à 0,5 meq/g et une viscosité

intrinsèque comprise de 0,01 à 0,8 dl/g, et étant utilisé en une quantité inférieure ou égale à 0,8 g de polymère par mètre carré de surface spécifique développée par les granulats, la viscosité intrinsèque étant mesurée à 25°C dans une solution NaCl 3M, avec un viscosimètre capillaire de type Ubbelhode, la surface spécifique ($\Sigma_{sp}$) développée par les granulats étant déterminée selon la formule (I) suivante :

$$\Sigma_{sp} = (0,0025 \times G) + (0,023 \times S) + (0,12 \times s) + (1,35 \times f) \quad \text{Formule (I)}$$

dans laquelle :

*G* est le pourcentage massique des granulats dont le diamètre est compris de 6,3 à 30 mm ;
*S* est le pourcentage massique des granulats dont le diamètre est compris de 0,315 à moins de 6,3 mm ;
*s* est le pourcentage massique des granulats dont le diamètre est compris de 0,08 à moins de 0,315 mm ;
*f* est le pourcentage massique des granulats dont le diamètre est strictement inférieur à 0,08 mm.

## Claims

1. Method for producing a bituminous composition, comprising the following steps:

(i) producing a mix of aggregates having a maximum diameter which is non-zero and less than or equal to 30 mm and in an amount of less than or equal to 0.8 g per square metre of specific surface area developed by the aggregates of at least one cationic polymer in liquid form having a density of cationic charges greater than or equal to 0.5 meq/g and an intrinsic viscosity of from 0.01 to 0.8 dl/g, the intrinsic viscosity being measured at 25 °C in a 3M NaCl solution using a capillary viscometer of the Ubbelhode type, the specific surface area ($\Sigma_{sp}$) developed by the aggregates being determined according to the following formula (I):

$$\Sigma_{sp} = (0.0025 \times G) + (0.023 \times S) + (0.12 \times s) + (1.35 \times f) \quad \text{Formula (I)}$$

in which:

*G* is the mass percentage of the aggregates having a diameter of from 6.3 to 30 mm;
*S* is the mass percentage of the aggregates having a diameter of from 0.315 to less than 6.3 mm;
*s* is the mass percentage of the aggregates having a diameter of from 0.08 to less than 0.315 mm;
*f* is the mass percentage of the aggregates having a diameter of strictly less than 0.08 mm; and

(ii) putting the mix obtained in stage (i) into contact with at least one bituminous binder.

2. Method according to claim 1, wherein the mix obtained in stage (i) comprises an amount of cationic polymer greater than or equal to 0.0001 g per square metre of specific surface area developed by the aggregates.

3. Method according to either claim 1 or claim 2, wherein the cationic polymer comprises quaternary amine groups and/or protonated amine groups.

4. Method according to any of the preceding claims, wherein the cationic polymer is obtainable by:

- condensation of epichlorohydrin with a dialkylamine; or
- condensation of epichlorohydrin with a monoalkylamine, followed by protonation.

5. Method according to any of the preceding claims, wherein the cationic polymer is obtainable by condensation of dicyandiamide with formaldehyde, followed by addition of at least one ammonium salt.

6. Method according to claim 5, wherein the molar ratio of formaldehyde to dicyandiamide is from 0.8:1 to 4:1.

7. Bituminous composition comprising at least one bituminous binder, aggregates having a maximum diameter which is non-zero and less than or equal to 30 mm and an amount less than or equal to 0.8 g per square metre of specific

surface area developed by the aggregates of at least one cationic polymer having a density of cationic charges greater than or equal to 0.5 meq/g and an intrinsic viscosity of from 0.01 to 0.8 dl/g, the intrinsic viscosity being measured at 25 °C in a 3M NaCl solution using a capillary viscometer of the Ubbelhode type, the specific surface area ($\Sigma_{sp}$) developed by the aggregates being determined according to the following formula (I):

$$\Sigma_{sp} = (0.0025 \times G) + (0.023 \times S) + (0.12 \times s) + (1.35 \times f) \quad \text{Formula (I)}$$

in which:

*G* is the mass percentage of the aggregates having a diameter of from 6.3 to 30 mm;
*S* is the mass percentage of the aggregates having a diameter of from 0.315 to less than 6.3 mm;
*s* is the mass percentage of the aggregates having a diameter of from 0.08 to less than 0.315 mm;
*f* is the mass percentage of the aggregates having a diameter of strictly less than 0.08 mm.

**8.** Use of at least one cationic polymer in liquid form for treating the surface of aggregates having a maximum diameter which is non-zero and less than or equal to 30 mm intended for the preparation of a bituminous composition, said cationic polymer having a density of cationic charges greater than or equal to 0.5 meq/g and an intrinsic viscosity of from 0.01 to 0.8 dl/g and being used in an amount of less than or equal to 0.8 g of polymer per square metre of specific surface area developed by the aggregates, the intrinsic viscosity being measured at 25 °C in a 3M NaCl solution using a capillary viscometer of the Ubbelhode type, the specific surface area ($\Sigma_{sp}$) developed by the aggregates being determined according to the following formula (I):

$$\Sigma_{sp} = (0.0025 \times G) + (0.023 \times S) + (0.12 \times s) + (1.35 \times f) \quad \text{Formula (I)}$$

in which:

*G* is the mass percentage of the aggregates having a diameter of from 6.3 to 30 mm;
*S* is the mass percentage of the aggregates having a diameter of from 0.315 to less than 6.3 mm;
*s* is the mass percentage of the aggregates having a diameter of from 0.08 to less than 0.315 mm;
*f* is the mass percentage of the aggregates having a diameter of strictly less than 0.08 mm.

## Patentansprüche

**1.** Verfahren zur Herstellung einer bitumenhaltigen Zusammensetzung, das die folgenden Schritte umfasst:

(i) Herstellen eines Gemischs aus Granulaten mit einem maximalen Durchmesser von ungleich Null und kleiner oder gleich 30 mm und einer Menge von kleiner oder gleich 0,8 g pro Quadratmeter spezifischer Oberfläche, die aus den Granulaten mindestens eines kationischen Polymers in flüssiger Form gebildet wird, das eine kationische Ladungsdichte von größer oder gleich 0,5 meq/g und eine intrinsische Viskosität zwischen 0,01 und 0,8 dl/g aufweist, wobei die intrinsische Viskosität bei 25 °C in einer NaCl 3M-Lösung, mit einem Kapillarviskosimeter des Typs Ubbelhode, gemessen wird, wobei die aus den Granulaten gebildete spezifische Oberfläche ($\Sigma_{sp}$) gemäß der folgenden Formel (I) bestimmt wird:

$$\Sigma_{sp} = (0{,}0025 \text{ x } G) + (0{,}023 \text{ x } S) + (0{,}12 \text{ x } s) + (1{,}35 \text{ x } f) \quad \text{Formel (I)}$$

wobei:

*G* der Masseanteil der Granulate ist, deren Durchmesser zwischen 6,3 und 30 mm beträgt;
*S* der Masseanteil der Granulate ist, deren Durchmesser zwischen 0,315 und weniger als 6,3 mm beträgt;
*s* der Masseanteil der Granulate ist, deren Durchmesser zwischen 0,08 und weniger als 0,315 mm beträgt;
*f* der Masseanteil der Granulate ist, deren Durchmesser in jedem Fall weniger als 0,08 mm beträgt; und

(ii) Inkontaktbringen des in Schritt (i) erhaltenen Gemischs mit mindestens einem bitumenhaltigen Bindemittel.

**2.** Verfahren nach Anspruch 1, wobei das in Schritt (i) erhaltene Gemisch eine kationische Polymermenge enthält, die größer oder gleich 0,0001 g pro Quadratmeter spezifischer Oberfläche, die aus den Granulaten gebildet wird, ist.

**3.** Vorrichtung nach Anspruch 1 oder 2, wobei das kationische Polymer quaternäre Amingruppen und/oder protonierte Amingruppen enthält.

**4.** Verfahren nach einem der vorhergehenden Ansprüche, wobei das kationische Polymer erhalten werden kann durch:

- Kondensation von Epichlorhydrin mit einem Dialkylamin; oder
- Kondensation von Epichlorhydrin mit einem Monoalkylamin, gefolgt von einer Protonierung.

**5.** Verfahren nach einem der vorhergehenden Ansprüche, wobei das kationische Polymer erhalten werden kann durch Kondensation von Dicyandiamid mit Formaldehyd und dann durch Zugabe mindestens eines Ammoniumsalzes.

**6.** Verfahren nach Anspruch 5, wobei das Molverhältnis zwischen Formaldehyd und Dicyandiamid zwischen 0,8/1 und 4/1 beträgt.

**7.** Kohlenwasserstoff-Zusammensetzung, umfassend mindestens ein Kohlenwasserstoffbindemittel, Granulate mit einem maximalen Durchmesser von ungleich Null und kleiner oder gleich 30 mm und einer Menge von kleiner oder gleich 0,8 g pro Quadratmeter spezifischer Oberfläche, die aus den Granulaten mindestens eines kationischen Polymers gebildet wird, das eine kationische Ladungsdichte von größer oder gleich 0,5 meq/g und eine intrinsische Viskosität zwischen 0,01 und 0,8 dl/g aufweist, wobei die intrinsische Viskosität bei 25 °C in einer NaCl 3M-Lösung, mit einem Kapillarviskosimeter des Typs Ubbelhode, gemessen wird, wobei die aus den Granulaten gebildete spezifische Oberfläche ($\Sigma_{sp}$) gemäß der folgenden Formel (I) bestimmt wird:

$$\Sigma_{sp} = (0{,}0025 \times G) + (0{,}023 \times S) + (0{,}12 \times s) + (1{,}35 \times f) \quad \text{Formel (I)}$$

wobei:

*G* der Masseanteil der Granulate ist, deren Durchmesser zwischen 6,3 und 30 mm beträgt;
*S* der Masseanteil der Granulate ist, deren Durchmesser zwischen 0,315 und weniger als 6,3 mm beträgt;
*s* der Masseanteil der Granulate ist, deren Durchmesser zwischen 0,08 und weniger als 0,315 mm beträgt;
*f* der Masseanteil der Granulate ist, deren Durchmesser in jedem Fall weniger als 0,08 mm beträgt.

**8.** Verwendung mindestens eines kationischen Polymers in flüssiger Form für die Oberflächenbehandlung von Granulaten mit einem maximalen Durchmesser von ungleich Null und kleiner oder gleich 30 mm, die für die Zubereitung einer bitumenhaltigen Zusammensetzung bestimmt sind, wobei das kationische Polymer eine kationische Ladungsdichte von größer oder gleich 0,5 meq/g und eine intrinsische Viskosität zwischen 0,01 und 0,8 dl/g aufweist und in einer Menge von kleiner oder gleich 0,8 g Polymer pro Quadratmeter spezifischer Oberfläche, die aus den Granulaten gebildet wird, verwendet wird, wobei die intrinsische Viskosität bei 25 °C in einer NaCl 3M-Lösung, mit einem Kapillarviskosimeter des Typs Ubbelhode, gemessen wird, wobei die aus den Granulaten gebildete spezifische Oberfläche ($\Sigma_{sp}$) gemäß der folgenden Formel (I) bestimmt wird:

$$\Sigma_{sp} = (0{,}0025 \times G) + (0{,}023 \times S) + (0{,}12 \times s) + (1{,}35 \times f) \quad \text{Formel (I)}$$

wobei:

*G* der Masseanteil der Granulate ist, deren Durchmesser zwischen 6,3 und 30 mm beträgt;
*S* der Masseanteil der Granulate ist, deren Durchmesser zwischen 0,315 und weniger als 6,3 mm beträgt;
*s* der Masseanteil der Granulate ist, deren Durchmesser zwischen 0,08 und weniger als 0,315 mm beträgt;
*f* der Masseanteil der Granulate ist, deren Durchmesser in jedem Fall weniger als 0,08 mm beträgt.

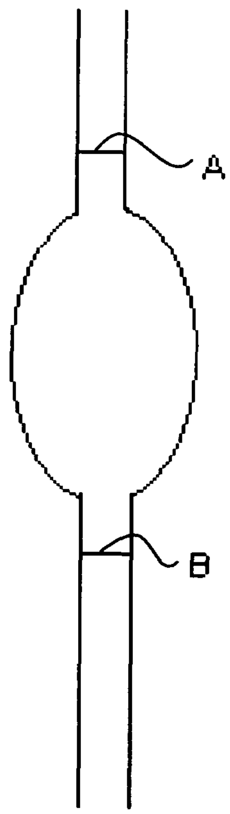


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1111010 A
- GB 1386855 A
- US 5160453 A
- US 5292441 A
- US 3738945 A
- US 3725312 A
- FR 1042084